# EUROPEAN PATENT SPECIFICATION

(11) **EP 0 451 447 B1**
(45) Date of publication and mention of the grant of the patent: **26.04.1995**
(21) Application number: 91101233.4
(22) Date of filing: 30.01.1991
(51) Int. Cl.: B29C 43/18, B29C 51/36, B29C 70/28

(54) **Method of forming synthetic resin formed articles**
Verfahren zur Herstellung von geformten Kunststoffartikeln
Procédé de fabrication d'articles formés en résine synthétique

(30) Priority: 30.03.1990 JP 85375/90
(43) Date of publication of application: 16.10.1991
(73) Proprietor: TOYODA GOSEI CO., LTD., Nishikasugai-gun Aichi-ken (JP)
(72) Inventor: Ito, Keizo, c/o Toyoda Gosei Co., Ltd., Nishikasugai-gun, Aichi-ken (JP); Kato, Takashi, c/o Toyoda Gosei Co., Ltd., Nishikasugai-gun, Aichi-ken (JP); Sakaida, Shoji, c/o Toyoda Gosei Co., Ltd., Nishikasugai-gun, Aichi-ken (JP); Ando, Hikaru, c/o Toyoda Gosei Co., Ltd., Nishikasugai-gun, Aichi-ken (JP)
(74) Representative: Tiedtke, Harro, Dipl.-Ing.

(56) References cited:
- EP-A- 0 186 016
- EP-A- 0 343 245
- GB-A- 2 206 835
- JP-A-58 171 921
- JP-A-60 212 312
- PATENT ABSTRACTS OF JAPAN, vol. 11, no. 255 (M-609)[2672], 22nd July 1987;& JP-A-62 39 218 (YUKIKAZU KASUGA) 22-02-1987

## Description

### BACKGROUND OF THE INVENTION

### Field of the Invention:

The present invention relates to a method of forming synthetic resin formed articles according to the preamble portion of claim 1, i.e. a method of in-mold forming synthetic resin formed articles. More particularly, the present invention pertains to a method of in-mold forming synthetic resin formed articles having a double-layer structure consisting of a base portion and a covering portion for covering the outer periphery of the base material including the end portion thereof, such as instrument panels, console boxes, undercovers, or glove doors for automobiles.

### Description of the Prior Art:

The document JP-A-58 171921 constituting the preamble portion of claim 1 discloses a method of forming a synthetic resin formed article which has a double-layer structure consisting of a base portion, the outer periphery of which is covered by a cover portion having an inwardly curved portion for covering an end portion of the base portion. This method starts with the step of vacuum forming a sheet-like material into a predetermined shape so as to obtain a cover portion. Then, the cover portion is set on a bottom die, whereupon a top die is clamped, foamable resin beads for forming the base portion are filled into a gap between the bottom and top dies, and the resin beads are heat foamed. Finally, the dies are opened and the formed article is removed.

However, one particular disadvantage of this injection molding method consists in that the covering portion is readily broken due to the injection pressure, deteriorating the yield of the products. Therefore, there has been a demand for forming the above-described types of formed articles by the press type forming method (such as stamping forming method which is disclosed in, for example, the document JP-A-59 7047.

### SUMMARY OF THE INVENTION

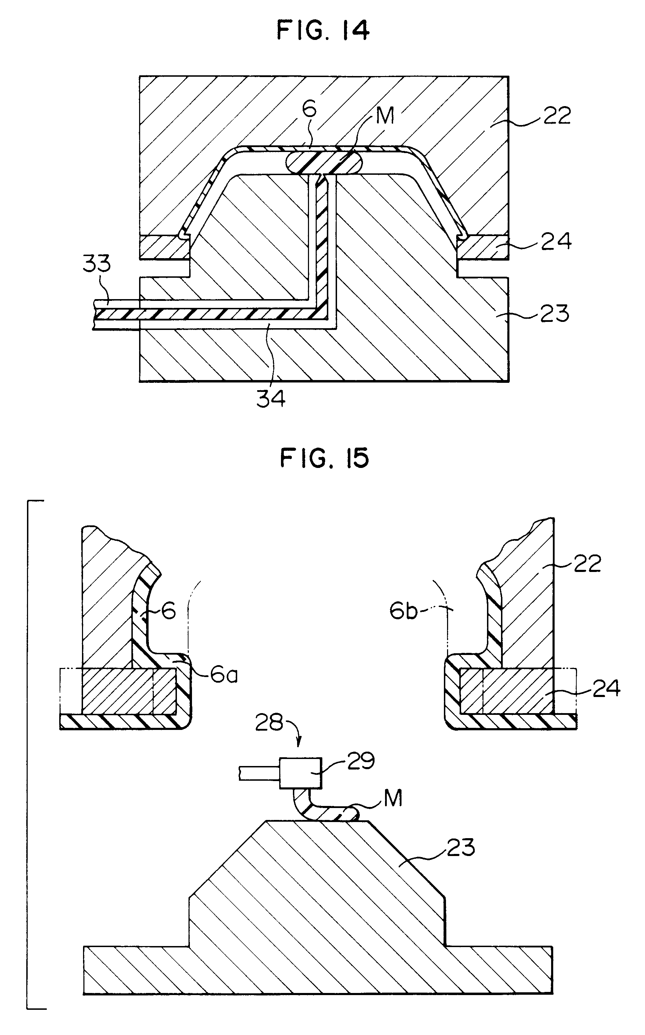

If a formed article such as that shown in Fig. 15 in which an end portion 6b of the base portion is covered by a curved portion 6a of the covering portion, is in-mold formed by the conventional press type forming method, it is necessary to conduct clamping in a state in which a slide core 24 is set at the forefront (as shown by the solid line in Fig. 15), wherein the following matters are taken into consideration.

If the setting of the slide core 24 follows the clamping, the molten resin M, which is the forming material of the base portion placed on a lower die 23, leaks from a gap between the slide core 24 during the clamping, thereby allowing burrs and false products to be generated due to shortage of the volume of the base portion caused by the leakage of the molten resin M. Also, clamping conducted in a state in which the slide core 24 is set at the forefront causes the curved portion 6a of the covering portion to be interfered by the lower die 23, thereby allowing breakage or shift of the covering portion 6 to be generated and yield of the products to be deteriorated. The covering portion 6 is set on an upper die 22 and the molten resin M is supplied on the lower die 23 from a die 29 of an extruding head 28.

In view of the aforementioned matters, the object of the present invention is to provide a synthetic resin formed article forming method which is capable of forming synthetic resin formed articles without generating burrs or breakage or shift of a covering portion, and which allows yield of the products to be improved. This object is solved by the features set forth in claim 1.

According to the invention, the method of forming a synthetic resin formed article is characterized by the steps of
trimming an end portion of a preliminary cover portion so as to obtain a cover portion,
setting the cover portion on a first die of a pair of dies constituting a press-type forming die, wherein an inwardly curved portion of the cover portion is supported by a slide core located at a forefront position after the cover portion has been set on the first die,
setting a molten resin for forming the base portion into a gap between the dies,
clamping the dies, thereby forming the molten resin into a predetermined shape between the cover portion and a second die of the pair of dies in order to obtain the base portion, wherein the slide core is in contact with the second die at the forefront position when clamping the dies,
opening the dies and removing the formed article.

Advantageously developed embodiments of the invention are subject-matter of the dependent claims 2 to 4.

In the synthetic resin formed article forming method according to the present invention, the trimming step which is conducted between the forming step and the clamping step involves formation of the covering portion which is to be set on one of the dies which constitute the press-type forming die in a subsequent setting step. The end portion of the covering portion is not interfered by the other die during the clamping which is conducted in a state in which the slide core is located at the forefront position. In consequence, breakage or shift of the covering portion, caused by the interference of the other die, can be eliminated, thereby enabling the manufacture of formed articles which have no wrinkles and an improved yield. Furthermore, since clamping is conducted in a state in which the slide core is in contact with the other die at the forefront position, leakage of the molten resin is eliminated, thereby preventing generation of burrs. Furthermore, the trimming process is not the final process but is conducted on the formed covering portion. In consequence, the trimming operation is simplified as compared with that conducted in the conventional method.

### BRIEF DESCRIPTION OF THE DRAWINGS

Fig. 1 is a vertical cross-sectional view of a forming die, showing the forming process conducted to prepare a covering portion in a first embodiment of the present invention;
Fig. 2 is a cross-sectional view showing the preparation process conducted for the formation of the covering portion in the embodiment of Fig. 1;
Fig. 3 is a cross-sectional view showing the softening process conducted for the formation of the covering portion in the embodiment of Fig. 1;
Fig. 4 is a cross-sectional view showing the setting process conducted for the formation of the covering portion in the embodiment of Fig. 1;
Fig. 5 is a cross-sectional view showing the clamping process conducted for the formation of the covering portion in the embodiment of Fig. 1;
Fig. 6 is a cross-sectional view showing the die parting process conducted for the formation of the covering portion in the embodiment of Fig. 1;
Fig. 7 is a cross-sectional view of a forming die, showing the covering portion setting process and the molten resin setting process which are conducted during the stamping in the embodiment of Fig. 1;
Fig. 8 is a cross-sectional view showing the clamping process conducted during stamping in the embodiment of Fig. 1;
Fig. 9 shows the die-parting process conducted at the end of the stamping in the embodiment of Fig. 1;
Fig. 10 is a partial cross-sectional view explaining measures of coping with spring back which occurs in the vicinity of the protruding portion of the formed article during the vacuum formation in the embodiment of Fig. 1;
Fig. 11 is a plan view of a sheet-like material used in the embodiment of Fig. 1;
Fig. 12 is a perspective view of the covering portion which is formed in the embodiment of Fig. 1;
Fig. 13 is a perspective view of a formed article obtained by the stamping in the embodiment of Fig. 1;
Fig. 14 is a cross-sectional view of an essential process of another embodiment according to the present invention; and
Fig. 15 is a cross-sectional view showing the problems of a conventional method of forming a synthetic resin formed article having a double-layer structure.

### DETAILED DESCRIPTION OF THE PREFERRED EMBODIMENTS

A first embodiment of the present invention will be described below with reference to the accompanying drawings.

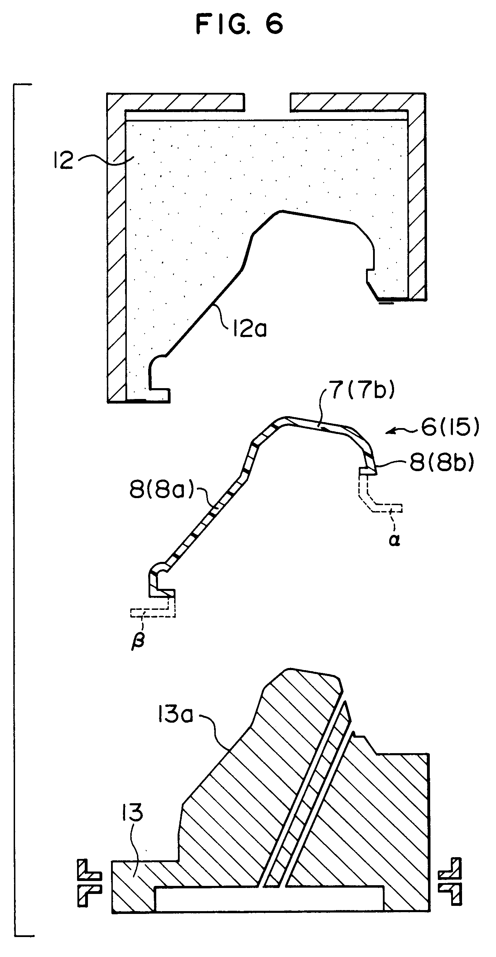

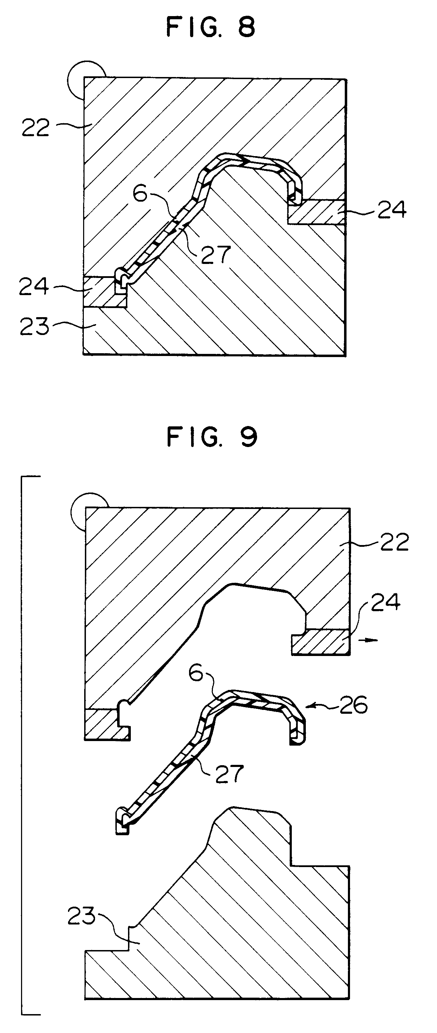

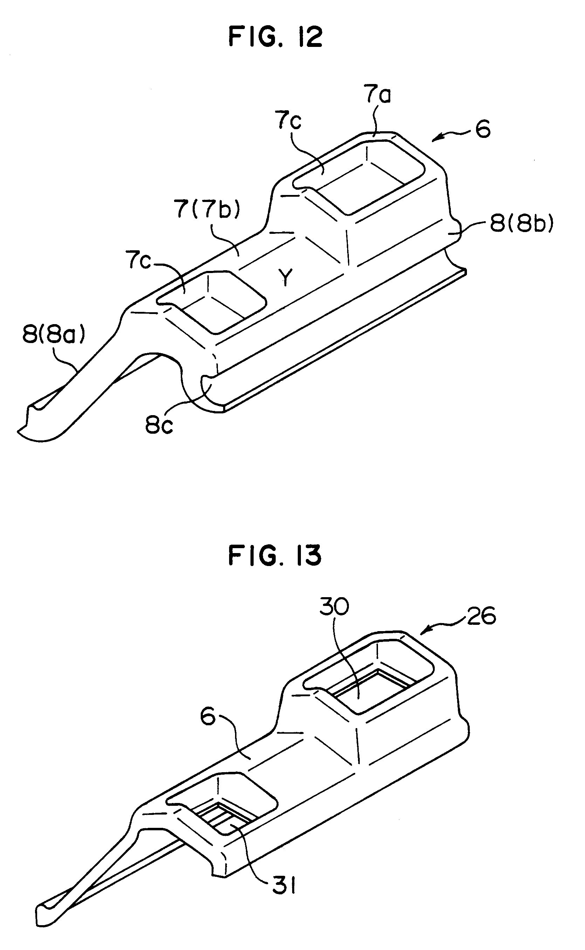

The formed article 6 manufactured in this embodiment is an instrument panel for an automobile having a double-layer structure consisting of a base portion 27 and a covering portion 6 whose surface has irregularities, e.g. is crept, and which covers the surface of the base portion 27, as shown in Figs. 9 and 13. The base portion 27 is formed of polypropylene (PP). The covering portion 6 is manufactured by vacuum forming a sheet-like material 15 shown in Figs. 6 and 11. The sheet-like material 15 is a composite sheet composed of a foamed layer made of a thermoplastic resin which may be polypropylene foam, and a covering layer made of soft polyvinyl chloride (PVC). The sheet-like material 15 is prepared by cutting this composite sheet laminated by adhesive, into predetermined shapes.

As shown in Figs. 6 and 12, the covering portion 6 has a box-like shape whose depth is large and which is made up of a horizontal wall portion 7 and a vertical wall portion 8 which extends downward from the periphery of the horizontal wall portion 7. The vertical wall portion 8 includes a long portion 8a and a short portion 8b which are positioned in opposed relation. The short portion 8b has an undercut portion 8c. The horizontal wall portion 7 includes an upper stage portion 7a and a lower stage portion 7b each of which has a recessed portion 7c which is to be cut out after the stamping which will be described later.

The manufacturing process of the formed article 26 will now be described.

First, the covering portion 6 is manufactured in advance in the manner described below.

### 1. Preparation

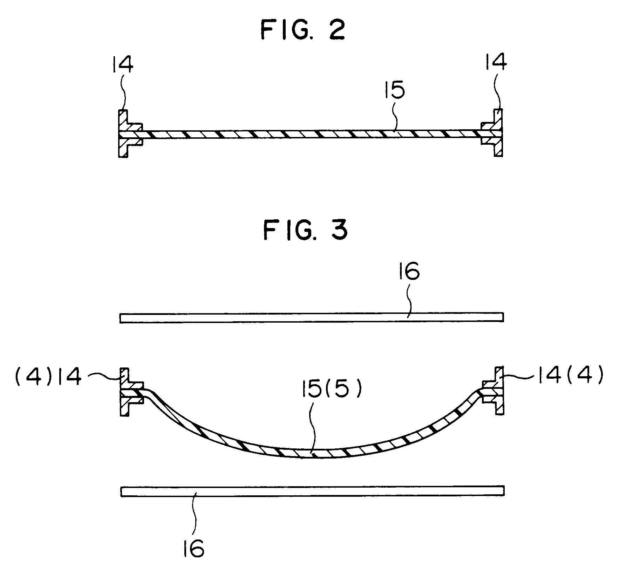

First, the flat sheet-like material 15 such as that shown in fig. 11, which corresponds to the formed article 6, is prepared, and the portions A to F of the peripheral edge thereof are gripped by a clamp 14 (see Fig. 2).

The sheet-like material 15 is prepared by cutting a composite sheet material in which PP foam is adhesively laminated on PVC sheet sheeted by calendering, into predetermined shapes. At that time, slits 15a (see Fig. 11) may be formed at positions of the sheet-like material 15 where the recessed portions 7c of the upper stage portion 7a are to be formed later such that they protrude upward and at the same time are recessed, to further reduce elongation of the sheet-like material 15 which will occur during the clamping of a vacuum die which will be described later. The clamp 14 which is used in this process is constructed such that it can hold a plurality of predetermined positions of the peripheral edge of the sheet-like material 15, such that it can release gripping partially, and such that it can shift the gripped portions.

### 2. Softening

Thereafter, the sheet-like material 15 is gripped and in that state softened by heating it to a temperature of 160 to 210°C by means of a ceramic heater 16 (see Fig. 3).

At that time, unlike the conventional case in which the entire periphery of the sheet-like material 15 is gripped by the clamp 14, since the peripheral edge of the sheet-like material 15 is partially gripped by the clamp 14, the portions of the material whose peripheral edge is not gripped move during the heating thereof. This enables distortion of the sheet-like material 15 which is generated during the calendering, to be removed.

### 3. Setting

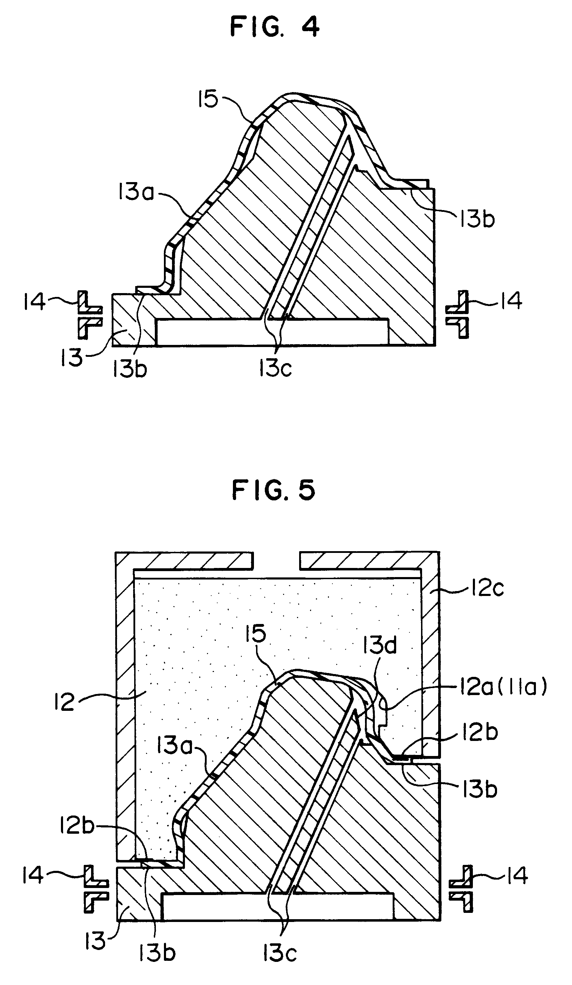

Thereafter, the softened sheet-like material 15 is placed on a lower die 13 (see Fig. 4) by releasing the gripping of the portions A to C of the sheet-like material 15 by the clamp 14, by shifting the clamp which grips the portions D and E rightward, and then by shifting the clamp which grips the portion F in Fig. 11 leftward.

At that time, since the sheet-like material 15 is placed on the lower die 13 in a state in which it is partially gripped by the clamp 14, the portion of the sheet-like material 15 which stretches is supplemented by the portion thereof whose peripheral edge is not gripped by the clamp and variations in the thickness of the sheet-like material can thus be suppressed.

The peripheral edge of the sheet-like material 15 is partially gripped by the clamp 14 at positions which allow wrinkles of the sheet-like material 15 to be eliminated when the sheet is placed on the lower die 13. The positions are appropriately set in accordance with the shape of the formed article. In the case of a formed article having a shape which does not allow the sheet to be wrinkled readily, the clamp for gripping the peripheral edge of the sheet-like material 15 may be released entirely when the sheet-like material is placed on the lower die.

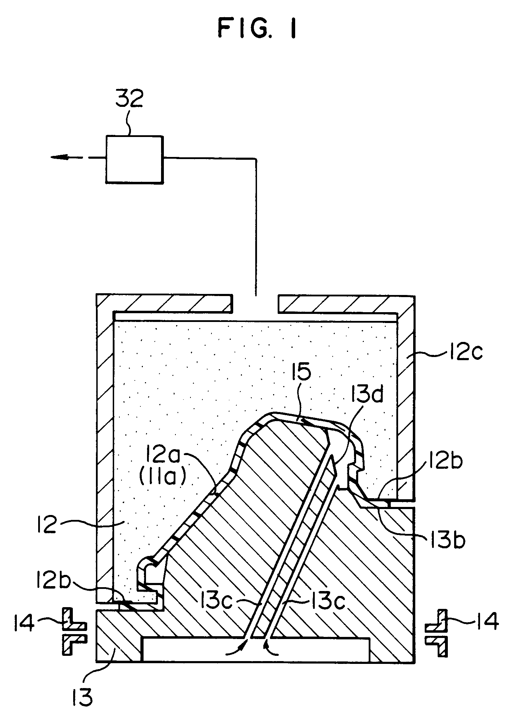

The vacuum forming die 11 used to form the sheet-like material 15 into the formed article 6 consists of an upper die 12, such as a porous ceramic die having a large number of air holes of electroformed mould, and the lower die 13, such as an assist plug die formed by a synthetic resin or aluminum, as shown in Fig. 1.

The upper die 12 has a cavity forming die surface 12a which can form a creping pattern on a surface of the sheet-like material 15 to form it in a predetermined shape. A sealing surface 12b on which a silicone sealant is coated, is formed around the cavity forming die surface 12a to seal the gap between the surface 12a and the sheet-like material 15 when it is gripped between the upper die 12 and the lower die 13 during the clamping. A covering member 12c is disposed such that it surrounds the upper die 12 to hermetically cover it. The interior of the covering member 12c located above the upper die 12 is connected to an evacuation means which is not shown.

The lower die 13 has a cavity forming die surface 13a in a predetermined shape to press the sheet-like material 15 against the cavity forming die surface 12a of the upper die 12. A gripping projection surface 13b is formed around the cavity forming die surface 13a to grip the peripheral edge of the sheet-like material 15 during the clamping together with the sealing surface 12b of the upper die 12. The cavity forming die surface 13a also has a recessed portion 13d for forming and parting of the undercut portion 8c of the formed article 6. Air holes 13c are slanted to the recessed portion 13d to press the sheet-like material 15 against the cavity forming die surface 12a of the upper die 12 due to the air pressure. The air holes 13c are connected to a pressurization means (not shown).

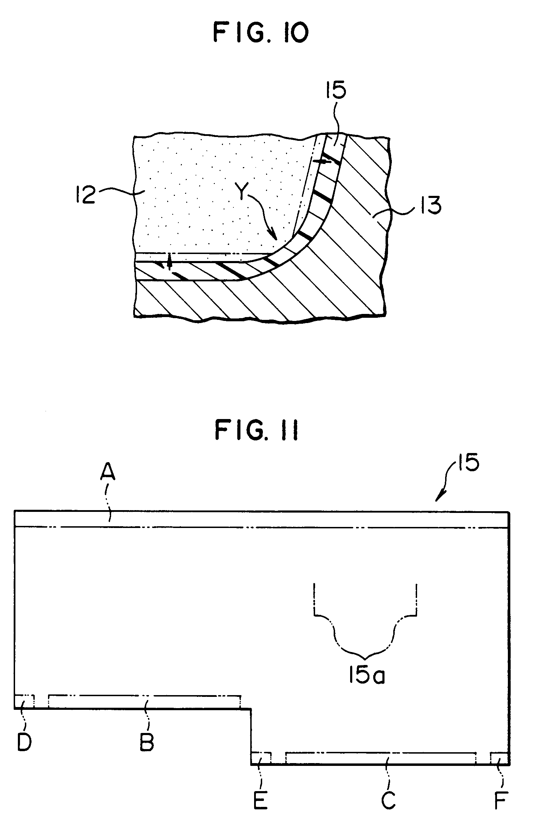

A cavity 11a should also be provided for the compression of the recessed portion Y of the formed article during the clamping. This is necessary to prevent the generation of wrinkles of the recessed portion due to the spring back which will occur after formation (see Fig. 10).

### 4. Clamping

Next, the vacuum die is clamped and the overall peripheral edge of the sheet-like material 15 is thereby gripped to be sealed by the sealing surface 12b of the upper die 12 and the gripping surface 13b of the lower die 13 (see Fig. 5). When the die is clamped, the peripheral edge of the sheet-like material 15 is gripped by the upper and lower dies 12 and 13 and the sheet-like material 15 is thereby fixed in position. So, the remaining grip of the sheet-like material by the clamp 14 is released.

At the beginning of the clamping, since the peripheral edge of the sheet-like material 15 is partially gripped by the clamp 14, the portion of the sheet-like material 15 which stretches is supplemented by the portion thereof whose peripheral edge is not gripped by the clamp and variations in the thickness of the sheet-like material can thus be suppressed. As a result, non-uniform thickness of the sheet-like material 15 can be restricted as much as possible

In this process, the foamed layer in the recessed portion Y of the formed article 6 must be compressed. This is achieved by reducing the space between the upper and lower dies corresponding to the recessed portion Y whilst the foamed layer is in a heated condition.

### 5. Forming

Subsequently, the sheet-like material 15 is pressed against the cavity forming die surface 12a of the upper die 12 to thereby form a creping pattern on the surface of the sheet-like material, and formed in a predetermined form by operating the pressurization means (not shown) and the evacuation means, such as a vacuum pump 32, under a pressure at which the PP foam is not compressed (see Fig. 1).

At that time, in the portion for gripping the sheet-like material 15 around the cavity forming die surface 12a of the upper die 12, the sealing surface 12b is formed such that it closes the air hole through which the air is evacuated to form a vacuum. In consequence, leakage of air from the peripheral edge of the sheet-like material 15 is prevented, and the forming can thus be conducted without any trouble.

### 6. Die-parting

After the sheet-like material 15 has been vacuum formed, the vacuum die is opened and the resultant preliminary formed article 6 is removed from the upper die 12 of the vacuum die (see Fig. 6).

### 7. Trimming

As shown in Fig. 6, an unnecessary end portion α, β of the preliminary formed article 6 is trimmed off to form the covering portion 6.

In a practiced operation, the vertical and horizontal portions are cut off from the preliminary covering portion to form the covering portion 6.

### 8. Covering portion setting

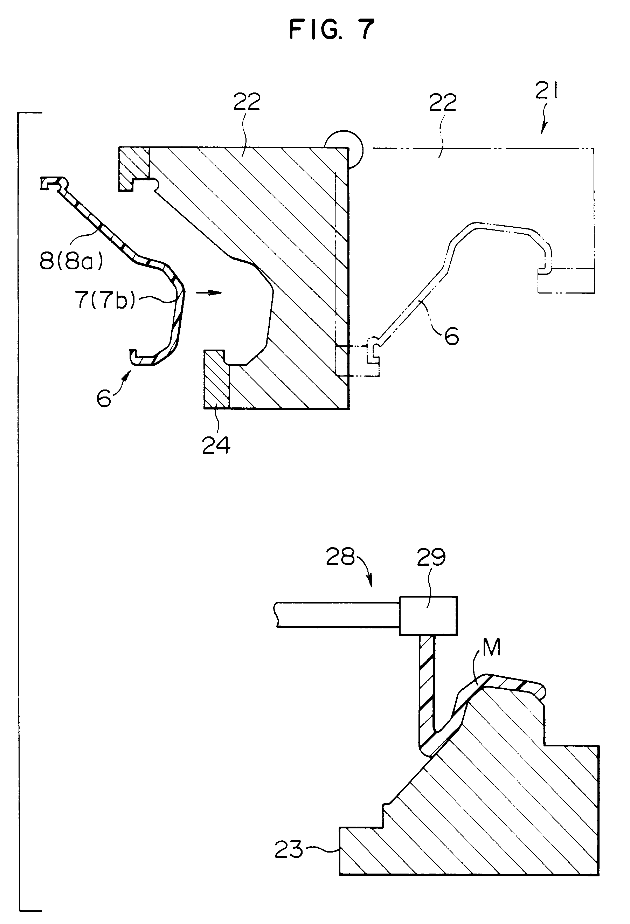

Thereafter, the covering portion 6 is set on an upper die 22 of a stamping die 21 (see Fig. 7). The upper die 22 has at its lower end a slide core 24 which is movable in a horizontal direction. The covering portion 6 is set on the upper die 22 with a curved portion 6a thereof being supported by the upper end surface of the slide core 24 without falling thereof.

At that time, the upper die 22 is pivoted downward beforehand and pivoted back upward after the setting. This way, the setting of the covering portion 6 is facilitated. Further, if the covering portion 6 has irregularities which are at least 3 mm in depth, the alignment of the position with respect to the upper die 22 is facilitated.

### 9. Setting of molten resin

When the covering portion 6 has been set on the upper die 22, a die 29 of an extruding head 29 which is a part of an extruder is disposed above a lower die 23 of the stamping die 21, and a molten forming material M which is formed of PP is then caused to flow out of the die 29 to be placed on the lower die 23 (see Fig. 7).

At that time, to reduce the degree at which the molten forming material M is cooled, the lower die 23 is preferably heated to a temperature of 40 to 100°C.

### 10. Clamping

After the molten forming material M has been placed on the lower die 23 with the covering portion 6 being set on the upper die 22, the clamping is conducted by moving the upper die 22 downward (at that time, the clamping pressure is between 50 to 150 ton), and the forming material M is then cooled to be set, by adjusting the temperature of the stamping die 21 (see Fig. 8).

At that time, since the forming material M made of PP is the same in quality as that of the backside of the covering portion 6, and located on the lower die 23 of the stamping die 21 in a melted state, the PP foam on the backside of the covering portion 6 is melted due to the heat of the forming material M, thereby allowing the covering portion 6 to be adhered to the base portion 27 without the use of an adhesive. Furthermore, since the forming material M sets and is formed into a predetermined shape by means of the stamping die 21, the use of a base material 27 which is conventionally formed beforehand is not necessary. During the clamping, the foam layer of the covering portion 6 is compressed by the pressure of the forming material M.

To prevent shift of the covering portion 6 during the clamping, a pin engaged with the covering portion 6 may be inserted into each of the holes formed in the portions of the covering portion 6 which have the possibility of being shifted with respect to the upper die 22 or the lower die 23 (see Figs. 7, 8 and 12).

During the clamping, the stamping die 21 is moved in a state in which the lower die 23 is in contact with the slide core 24 located at the forefront. In consequence, leakage of a molten resin from a gap between the lower die 23 and the slide core 24 and, hence, formation of burrs can be avoided. Furthermore, as shown in Figs. 8 and 9, the curved portion of the covering portion 6 is rarely interfered by the lower die 23 during the movement of the die 21. In consequence, breakage or shift of the covering portion 6, caused by the interference thereof by the lower die 23 in the conventional method, can be eliminated.

### 11. Die parting

After the forming material M has set, the stamping die 21 is opened while the slide core 24 is being moved, and the formed article 26 is removed from the die. Thereafter, the end portion of the article 26 is treated such that trimming of the peripheral edge thereof and curving of the covering portion 6 are conducted (see Fig. 9).

At that time, the foam layer compressed during the clamping restores to its original shape. Generation of wrinkles of the Y portion of the covering portion 6, shown in Fig. 10, which would be caused by the presence of the foam layer, is avoided due to the compression of the foam layer on the Y portion.

### 12. Hole formation

Thereafter, holes 30 and 31 are formed by cutting open the recessed portions 7c of the covering portion 6 by means of a die cutter or the like, as shown in Fig. 13. The holes 30 and 31 can receive instruments or the like. Thus, an instrument panel 1, which is a synthetic resin formed article 26 having a double-layer structure consisting of the covering portion 6 and the base portion 27, is obtained.

Fig. 14 shows the essential process of the in-mold forming method by the so-called SPM method, forming a second embodiment of the present invention.

As regards the molten resin setting process and the clamping process the process shown in Fig. 14 corresponds to the above-described stamping forming method.

The process shown in Fig. 14 is characterized by the synchronization of the clamping of the die and the molten resin setting. The setting of the molten resin M is effected such that the molten resin M is caused to flow out from an injection nozzle 33 and then passed through a hot runner 34 formed in the lower die 23 into a cavity formed by the die which is in the midst of being clamped. The other processes are the same as those in the above-described first embodiment so that a description thereof is omitted.

In this embodiment, the same effect as that obtained in the first embodiment can be obtained.

## Claims

1. A method of forming a synthetic resin formed article (26) having a double-layer structure consisting of a base portion (27), the outer periphery of which is covered by a cover portion (6) having an inwardly curved portion for covering an end portion of said base portion (27), wherein a preliminary cover portion is obtained by vacuum forming a sheet-like material (15) into a predetermined shape, **characterized by** the steps of
trimming an end portion (α, β) of said preliminary cover portion so as to obtain said cover portion (6),
setting said cover portion (6) on a first die (22) of a pair of dies (22, 23) constituting a press-type forming die (21), wherein said inwardly curved portion of said cover portion (6) is supported by a slide core (24) located at a forefront position after said cover portion (6) has been set on said first die (22),
setting a molten resin (M) for forming said base portion (27) into a gap between said dies (22, 23),
clamping said dies (22, 23), thereby forming said molten, resin (M) into a predetermined shape between said cover portion (6) and a second die (23) of said pair of dies (22, 23) in order to obtain said base portion (27), wherein said slide core (24) is in contact with said second die (23) at the forefront position when clamping said dies (22, 23),
opening said dies (22, 23) and removing said formed article (26).

2. A method according to claim 1, characterized in that said cover portion setting step includes the setting of said cover portion (6) on one of the die surfaces of said press-type forming die (21), and that said molten resin setting step includes the extrusion of said molten resin (M) from an extruder (28, 29) onto the other die surface of said press-type forming die (21).

3. A method according to claim 1, characterized in that said cover portion setting step includes the setting of said cover portion (6) on one of the die surfaces of said press-type forming die (21), and that said molten resin setting step includes the injection of said molten resin (M) from said second die (23) when said dies (22, 23) are located close to each other (in a half-clamped state).

4. A method according to one of the preceding claims, characterized in that said sheet-like material (15) for vacuum forming said preliminary cover portion is made of a thermoplastic resin and has a surface layer and a foam layer, wherein said vacuum forming is performed using a two-part die (12, 13) having an upper and a lower die, one of which is connected to an evacuation means (32), said vacuum forming step including the steps of
softening by heating said sheet-like material (15) a peripheral edge of which is gripped by a clamp (14),
setting the softened sheet-like material (15) on said lower die (13) of said two-part die (12, 13) by removing a part of or all of said clamp (14), and
clamping said two-part die (12, 13) while sealing it by gripping the overall periphery of said sheet-like material (15) by means of said upper and lower dies (12, 13), wherein said foam layer located at a corner (Y) in said two-part die (12, 13) is compressed by said two-part die (12, 13).

## Patentansprüche

1. Verfahren zum Herstellen eines Artikels (26), der aus Kunstharz geformt ist und eine Doppelschichtstruktur hat, die einen Grundabschnitt (27) aufweist, dessen Außenumfang durch einen Abdeckungsabschnitt (6) bedeckt ist, der einen nach innen gekrümmten Abschnitt zum Bedecken eines Endabschnitts des Grundabschnitts (27) hat, wobei durch das Vakuumformen eines bogenartigen Materials (15) in eine vorbestimmte Form ein vorbereiteter Abdeckungsabschnitt erhalten wird,
gekennzeichnet durch die Schritte:
Beschneiden eines Endabschnitts (α, β) des vorbereiteten Abdeckungsabschnitts, um den Abdeckungsabschnitt (6) zu erhalten,
Aufbringen des Abdeckungsabschnitts (6) auf ein erstes Werkzeug (22) des Paares von Werkzeugen (22, 23) die ein Formwerkzeug (21) vom Preßtyp bilden, wobei der nach innen gekrümmte Abschnitt des Abdeckungsabschnitts (6) durch einen Gleitkern (24) gestützt wird, der sich an einer Vorderseiten-Position befindet, nachdem der Abdeckungsabschnitt (6) auf das erste Werkzeug (22) aufgebracht wurde,
Einbringen eines schmelzflüssigen Harzes (M) zum Ausbilden des Grundabschnitts (27) in einen Spalt zwischen den Werkzeugen (22, 23),
Schließen der Werkzeuge (22, 23), wodurch das schmelzflüssige Harz (M) zwischen dem Abdeckungsabschnitt (6) und einem zweiten Werkzeug (23) des Paares von Werkzeugen (22, 23) in eine vorbestimmte Form geformt wird, um den Grundabschnitt (27) zu erhalten, wobei sich der Gleitkern (24) mit dem zweiten Werkzeug (23) an der Vorderseiten-Position in Berührung befindet, wenn die Werkzeuge (22, 23) geschlossen sind,
Öffnen der Werkzeuge (22, 23) und Entfernen des geformten Artikels (26).

2. Verfahren nach Anspruch 1, dadurch gekennzeichnet, daß der Abdeckungsabschnitt-Aufbringschritt das Aufbringen des Abdeckungsabschnitts (6) auf eine der Werkzeugflächen des Formwerkzeugs (21) vom Preßtyp beinhaltet und daß der Aufbringschritt von schmelzflüssigem Harz die Extrusion des schmelzflüssigen Harzes (M) aus einem Extruder (28, 29) auf die andere Werkzeugfläche des Formwerkzeugs (21) vom Preßtyp beinhaltet.

3. Verfahren nach Anspruch 1, dadurch gekennzeichnet, daß der Abdeckungsabschnitt-Aufbringschritt das Aufbringen des Abdeckungsabschnitts (6) auf eine der Werkzeugflächen des Formwerkzeugs (21) vom Preßtyp beinhaltet und daß der Aufbringschritt von schmelzflüssigem Harz das Einspritzen des schmelzflüssigen Harzes (M) vom zweiten Werkzeug (23) beinhaltet, wenn sich die Werkzeuge (22, 23) nahe zueinander befinden (in einem halbgeschlossenen Zustand).

4. Verfahren nach einem der vorhergehenden Ansprüche, dadurch gekennzeichnet, daß das bogenartige Material (15) zum Vakuumformen des vorbereiteten Abdeckungsabschnitts aus thermoplastischem Harz gefertigt ist und eine Oberflächenschicht und eine Schaumschicht hat, wobei das Vakuumformen durchgeführt wird, indem ein zweiteiliges Werkzeug (12, 13) verwendet wird, das ein oberes und ein unteres Werkzeug hat, wobei eines von diesen mit einer Evakuiereinrichtung (32) verbunden ist, wobei der Vakuumformschritt die Schritte aufweist:
Erweichen des bogenartigen Materials (15) durch Erwärmen, wobei eine Umfangskante von diesem durch eine Klemmvorrichtung (14) gegriffen wird,
Aufbringen des erweichten, bogenartigen Materials (15) auf das untere Werkzeug (13) des zweiteiligen Werkzeugs (12, 13), indem ein Teil der Klemmvorrichtung (14) oder alle Klemmvorrichtungen entfernt werden, und
Schließen des zweiteiligen Werkzeugs (12, 13), während es abgedichtet wird, indem der Gesamtumfang des bogenartigen Materials (15) mittels des oberen und unteren Werkzeugs (12, 13) gegriffen wird, wobei die Schaumschicht, die sich an einer Ecke (Y) im zweiteiligen Werkzeug (12, 13) befindet, durch das zweiteilige Werkzeug (12, 13) zusammengedrückt wird.

## Revendications

1. Procédé de fabrication d'un article formé en résine synthétique (26) comportant une structure à double couche consistant en une portion de base (27), dont la périphérie externe est recouverte par une portion de recouvrement (6) comportant une portion incurvée vers l'intérieur pour recouvrir une portion d'extrémité de ladite portion de base (27), dans lequel une portion de recouvrement préliminaire est obtenue par formage sous vide d'un matériau en feuille (15) selon une forme prédéterminée, caractérisé par les étapes consistant à:
sectionner les portions d'extrémité (α, β) de ladite portion de recouvrement préliminaire de manière à obtenir ladite portion de recouvrement (6),
disposer ladite portion de recouvrement (6) sur une première matrice (22) d'une paire de matrices (22, 23) constituant une matrice de formage du type presse (21), dans laquelle ladite portion incurvée vers l'intérieur de ladite portion de recouvrement (6) est supportée par un noyau coulissant (24) situé dans sa position avancée après que ladite portion de recouvrement (6) a été disposée sur ladite première matrice (22),
envoyer une résine fondue (M) pour former ladite portion de base (27) dans un interstice compris entre lesdites matrices (22, 23),
serrer lesdites matrices (22, 23), conformant ainsi la résine fondue sous une forme prédéterminée entre ladite portion de recouvrement (6) et une seconde matrice (23) de ladite paire de matrices (22, 23) pour obtenir ladite portion de base (27), ledit noyau coulissant (24) étant en contact avec ladite seconde matrice (23) dans sa position avancée lorsqu'on serre lesdites matrices (22, 23),
ouvrir lesdites matrices (22, 23) et en retirer ledit article profilé (26).

2. Procédé selon la revendication 1, caractérisé en ce que ladite opération de mise en place de la portion de recouvrement comprend la mise en place de ladite portion de recouvrement (6) sur l'une des surfaces de ladite matrice inférieure du type presse (21), et en ce que ladite opération d'application de résine fondue comprend l'extrusion de ladite résine fondue (M) à partir d'une extrudeuse (28, 29) sur l'autre surface de ladite matrice inférieure du type presse (21).

3. Procédé selon la revendication 1, caractérisé en ce que ladite opération de mise en place de la portion de recouvrement comprend la mise en place de ladite portion de recouvrement (6) sur l'une des surfaces de ladite matrice inférieure du type presse (21) et en ce que ladite étape d'application de résine fondue comprend l'injection de résine fondue (M) à partir de ladite seconde matrice quand lesdites matrices (22, 23) sont situées à proximité l'une de l'autre (à l'état demi-serré).

4. Procédé selon l'une quelconque des revendications précédentes, caractérisé en ce que ledit matériau en feuille (15) destiné au formage sous vide de ladite portion de recouvrement préliminaire est réalisé en une résine thermoplastique et comprend une couche de surface et une couche de mousse, ledit formage sous vide étant réalisé en utilisant une matrice en deux parties (12, 13) comprenant une matrice supérieure et une matrice inférieure, dont une est reliée à un moyen de mise sous vide (32), ladite étape de formage sous vide comprenant les étapes consistant à:
ramollir par chauffage ledit matériau en feuille (15) dont un bord périphérique est retenu par une pince (14),
appliquer ledit matériau en feuille ramolli (15) sur ladite matrice inférieure (13) de ladite matrice en deux parties (12, 13) en éliminant une partie ou la totalité de ladite pince (14), et
serrer ladite matrice en deux parties (12, 13) tout en la rendant étanche en saisissant la périphérie d'ensemble dudit matériau en feuille (15) au moyen desdites matrices supérieure et inférieure (12, 13), ladite couche de mousse située dans un coin (Y) de ladite matrice en deux parties (12, 13) étant comprimée par ladite matrice en deux parties (12, 13).
